# EUROPEAN PATENT SPECIFICATION

(11) **EP 3 763 617 B1**
(45) Date of publication and mention of the grant of the patent: **20.09.2023**
(21) Application number: 19763523.8
(22) Date of filing: 28.02.2019
(51) Int. Cl.: B63B 25/16, B65D 90/02, F17C 13/02

(54) **LIQUID HYDROGEN CARRIER SHIP AND HULL PROTECTION METHOD**
FLÜSSIGWASSERSTOFFTRÄGERSCHIFF UND VERFAHREN ZUM SCHUTZ DES RUMPFES
NAVIRE PORTEUR D'HYDROGÈNE LIQUIDE ET PROCÉDÉ DE PROTECTION DE COQUE

(30) Priority: 06.03.2018 JP 2018039576
(43) Date of publication of application: 13.01.2021
(73) Proprietor: Kawasaki Jukogyo Kabushiki Kaisha, Hyogo 650-8670 (JP)
(72) Inventor: GOKAN, Kazuto, Kobe-shi, Hyogo 650-8670 (JP); OHASHI, Tetsuya, Kobe-shi, Hyogo 650-8670 (JP); SUZUKI, Tomomi, Kobe-shi, Hyogo 650-8670 (JP)
(74) Representative: Dehns
(86) International application number: PCT/JP2019/007876
(87) International publication number: WO 2019/172082

(56) References cited:
- WO-A1-2014/203530
- JP-A- H0 717 467
- JP-A- S5 311 482
- JP-A- S5 635 899
- JP-A- 2002 137 788

## Description

### Technical Field

The present invention relates to a liquefied hydrogen carrier and a hull protection method.

### Background Art

In recent years, the development of liquefied hydrogen carriers for transporting liquefied hydrogen has been carried out. For example, Patent Literature 1 discloses a liquefied gas carrier capable of transporting liquefied hydrogen.

In the liquefied gas carrier disclosed in Patent Literature 1, a tank cover is disposed over a tank installed in the hull. The tank cover forms a holding space together with the hull. The holding space accommodates the tank. Inert gas, such as nitrogen, is supplied into the holding space.

The tank includes a tank body and a thermal insulation layer. The tank body stores liquefied gas, and the thermal insulation layer encompasses the tank body. In the liquefied gas carrier disclosed in Patent Literature 1, the thermal insulation layer includes an outer shell and a vacuum space. The outer shell surrounds the tank body while being spaced apart from the tank body. The vacuum space is formed between the outer shell and the tank body. Temperature sensors are disposed on the outer shell and used to detect the temperature within the vacuum space.

### Citation List

### Patent Literature

PTL 1: WO 2014/203530 A1

### Summary of Invention

### Technical Problem

In the liquefied gas carrier disclosed in Patent Literature 1, in a case where the liquefied gas stored in the tank is liquefied hydrogen and the inert gas supplied into the holding space accommodating the tank is nitrogen, when the performance of the thermal insulation layer of the tank deteriorates, there is a possibility that liquefied nitrogen (about -196°C) is generated on the surface of the thermal insulation layer of the tank.

Generally speaking, the hull is made of a general steel material that is not intended for low-temperature use. Accordingly, if the liquefied nitrogen generated on the surface of the thermal insulation layer of the tank falls off onto a part of the hull, the part being positioned below the tank, it may cause a defect of the hull.

In view of the above, an object of the present invention is to provide a liquefied hydrogen carrier and a hull protection method that make it possible to prevent liquefied nitrogen from causing a defect of the hull.

### Solution to Problem

In order to solve the above-described problems, a liquefied hydrogen carrier according to one aspect of the present invention includes: a hull; a tank installed in the hull, the tank including a tank body and a thermal insulation layer, the tank body storing liquefied hydrogen, the thermal insulation layer encompassing the tank body; a tank cover forming a holding space together with the hull, the holding space accommodating the tank; nitrogen supplying equipment that supplies nitrogen into the holding space; seawater supplying equipment that supplies seawater into the holding space; a thermometer that measures a temperature of a surface of the thermal insulation layer or a temperature inside the thermal insulation layer, or a temperature of a part of the hull, the part of the hull being positioned below the tank; and a controller that controls the seawater supplying equipment such that a seawater layer is formed on a bottom of the holding space when the temperature measured by the thermometer has become lower than a setting value.

According to the above configuration, in the case in which the thermometer measures a temperature of a surface of the thermal insulation layer or a temperature inside the thermal insulation layer, if the setting value is set to a temperature below which it is assumed that the performance of the thermal insulation layer has deteriorated, then in this case, when the performance of the thermal insulation layer of the tank has deteriorated and liquefied nitrogen is generated on the surface of the thermal insulation layer, the seawater layer is already formed on the bottom of the holding space. Therefore, even if the liquefied nitrogen falls off, it will not come into direct contact with the hull. Specifically, the liquefied nitrogen that has fallen off comes into contact with the seawater layer, and as a result, the temperature of the liquefied nitrogen increases. This makes it possible to prevent the liquefied nitrogen from causing a defect of the hull.

According to the above configuration, in the case in which the thermometer measures a temperature of a part of the hull, the part of the hull being positioned below the tank, if the setting value is set to a temperature below which it is assumed that the liquefied nitrogen has fallen off, then in this case, immediately after the liquefied nitrogen starts falling off, the seawater layer is formed on the bottom of the holding space. Therefore, the liquefied nitrogen that falls off after the seawater layer is formed will not come into direct contact with the hull. This makes it possible to prevent the liquefied nitrogen from causing a defect of the hull.

For example, the thermal insulation layer may include: an outer shell that surrounds the tank body while being spaced apart from the tank body; and a vacuum space formed between the outer shell and the tank body.

The seawater supplying equipment may include: a fire extinguishing pipe routed on a deck of the hull; and a branch pipe branched off from the fire extinguishing pipe. According to this configuration, the seawater supplying equipment, which supplies seawater into the holding space, can be configured by utilizing fire extinguishing equipment, which is essential equipment for the ship.

A hull protection method according to the present invention is a method of protecting a hull in which a tank is installed, the tank including a tank body and a thermal insulation layer, the tank body storing liquefied hydrogen, the thermal insulation layer encompassing the tank body, the hull forming, together with a tank cover, a holding space between the tank cover and the hull, the holding space accommodating the tank and being filled with nitrogen. The method includes forming a seawater layer on a bottom of the holding space by supplying seawater into the holding space when a temperature of a surface of the thermal insulation layer of the tank, a temperature inside the thermal insulation layer, or a temperature of a part of the hull, the part being positioned below the tank, has become lower than a setting value.

The method configured as above can provide the same advantageous effects as those provided by the liquefied hydrogen carrier according to the present invention.

### Advantageous Effects of Invention

The present invention makes it possible to prevent liquefied nitrogen from causing a defect of the hull.

### Brief Description of Drawings

FIG. 1 is a side view of a liquefied hydrogen carrier according to Embodiment 1 of the present invention.
FIG. 2 is a cross-sectional view taken along line II-II of FIG. 1.
FIG. 3 is a longitudinal sectional view taken along line III-III of FIG. 2.
FIG. 4 is a cross-sectional view of a liquefied hydrogen carrier according to Embodiment 2 of the present invention.
FIG. 5 is a longitudinal sectional view taken along line V-V of FIG. 4.

### Description of Embodiments

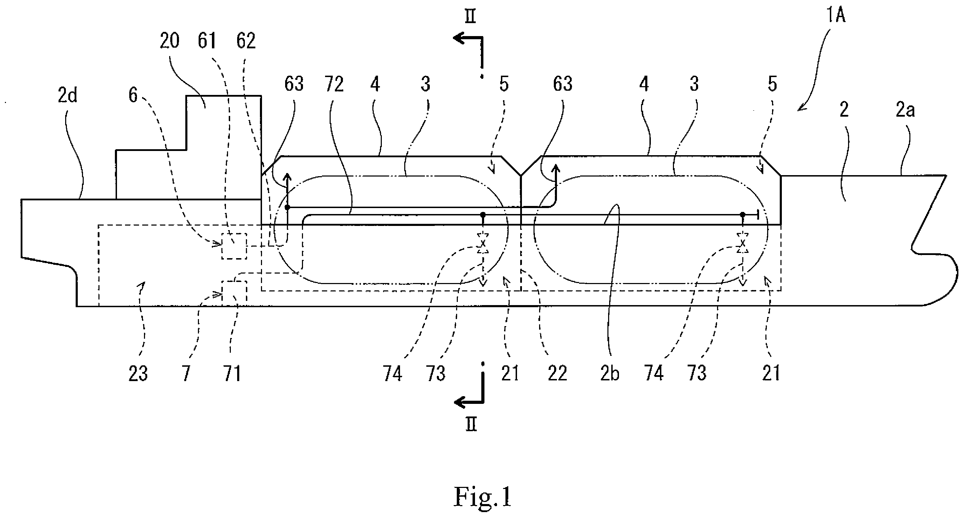

FIG. 1 shows a liquefied hydrogen carrier 1A according to Embodiment 1 of the present invention. The liquefied hydrogen carrier 1A includes a hull 2 and two tanks 3 installed in the hull 2. The tanks 3 are arranged in the ship length direction. Alternatively, the number of tanks 3 installed in the hull 2 may be one, or three or more.

In the present embodiment, each tank 3 is a cylindrical tank that is long in the horizontal direction (ship length direction). Alternatively, each tank 3 may have a spherical, cubic, or rectangular parallelepiped shape.

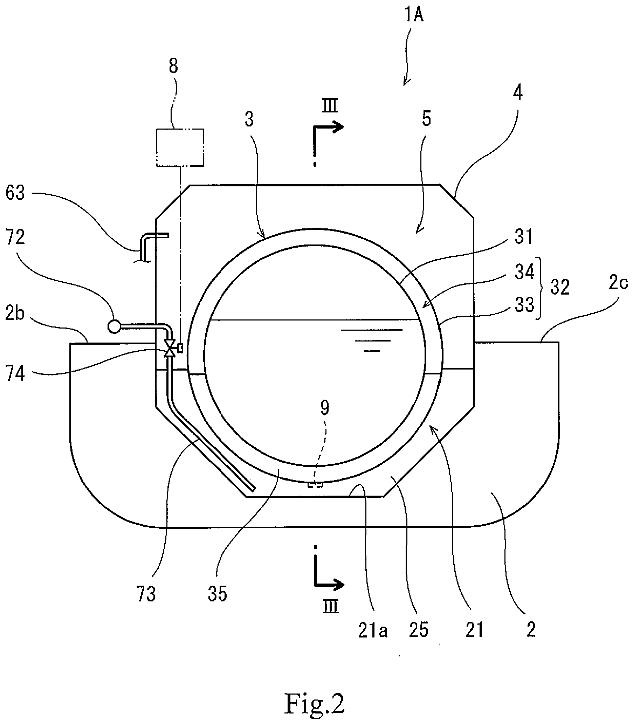

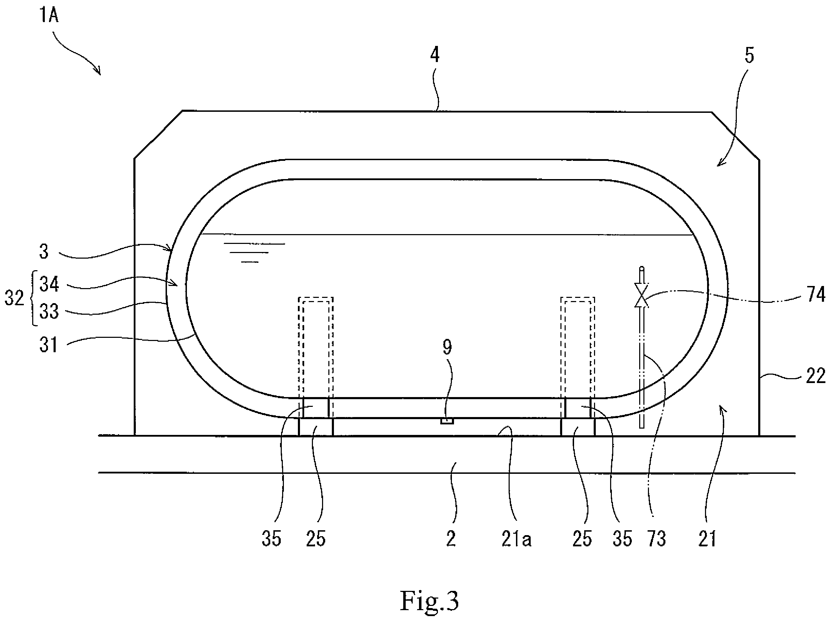

As shown in FIG. 2 and FIG. 3, each tank 3 includes a tank body 31 and a thermal insulation layer 32. The tank body 31 stores liquefied hydrogen. The thermal insulation layer 32 encompasses the tank body 31. In the present embodiment, the thermal insulation layer 32 includes an outer shell 33 and a vacuum space 34. The outer shell 33 surrounds the tank body 31 while being spaced apart from the tank body 31. The vacuum space 34 is formed between the outer shell 33 and the tank body 31. Alternatively, the thermal insulation layer 32 may be constituted by a plurality of thermal insulators (e.g., vacuum insulation panels) arranged on the surface of the tank body 31. Although not illustrated, a vacuum thermal insulator that wraps the tank body 31 while being spaced apart from the inner surface of the outer shell 33 is disposed in the vacuum space 34.

To be more specific, the tank body 31 includes a body portion and hemispherical sealing portions. The body portion extends in the ship length direction with a constant cross-sectional shape, and the hemispherical sealing portions seal openings on both sides of the body portion. Alternatively, each sealing portion may have a flat shape perpendicular to the body portion, or may be dish-shaped. The outer shell 33 has such a shape that the tank body 31 has been enlarged.

Two cargo holds 21, which are open upward, are formed in the hull 2. The cargo holds 21 are arranged in the ship length direction, and are partitioned off from each other by a bulkhead 22. Inside each cargo hold 21, the lower part of a corresponding one of the tanks 3 is inserted. That is, a bottom surface 21a of the cargo hold 21 is a part of the hull 2, the part being positioned below the tank 3.

Inside each cargo hold 21, a pair of saddles 25 is provided. The saddles 25 are spaced apart from each other in the axial direction of the tank 3. The saddles 25 support the outer shell 33 of the tank 3. Between the tank body 31 and the outer shell 33 of the tank 3, a pair of support members 35 is provided. The support members 35 support the tank body 31 at the same positions as the saddles 25.

The hull 2 includes: a fore deck 2a positioned forward of the cargo holds 21; side decks 2b and 2c positioned at both sides of the cargo holds 21; and an aft deck 2d positioned rearward of the cargo holds 21. In the hull 2, an engine room 23 is formed rearward of the cargo holds 21.

Tank covers 4 are disposed over the respective tanks 3. Each tank cover 4 forms a holding space 5 together with a corresponding one of the cargo holds 21 of the hull 2. The holding spaces 5 accommodate the respective tanks 3.

The hull 2 is equipped with nitrogen supplying equipment 6 and seawater supplying equipment 7. The nitrogen supplying equipment 6 supplies nitrogen into each of the holding spaces 5. The seawater supplying equipment 7 supplies seawater into each of the holding spaces 5.

The nitrogen supplying equipment 6 includes: a nitrogen generator 61; a header pipe 62 extending from the nitrogen generator 61; two branch pipes 63 branched off from the header pipe 62 and extending into the two holding spaces 5, respectively. The nitrogen generator 61 is, for example, disposed in the engine room 23 and includes a separation membrane that selectively allows nitrogen in the air to permeate therethrough. The nitrogen supplying equipment 6 keeps supplying nitrogen into the holding spaces 5 except in special cases, such as when ship crews enter the holding spaces 5. Accordingly, the holding spaces 5 are filled with nitrogen.

In the present embodiment, the seawater supplying equipment 7 doubles as fire extinguishing equipment. Specifically, the seawater supplying equipment 7 includes a seawater pump 71, a fire extinguishing pipe 72, and two branch pipes 73. The seawater pump 71 is disposed in the engine room 23, and pumps up seawater from the outside of the hull 2. The fire extinguishing pipe 72 extends from the seawater pump 71 to the side deck 2b, and is routed on the side deck 2b. The two branch pipes 73 are branched off from the fire extinguishing pipe 72, and extend into the two holding spaces 5, respectively. In the present embodiment, each of the branch pipes 73 extends to the vicinity of the bottom surface 21a of a corresponding one of the cargo holds 21. Each branch pipe 73 is provided with an open/close valve 74.

The seawater supplying equipment 7 is controlled by a controller 8 (see FIG. 2). The controller 8 may be disposed in a bridge 20 of the hull 2, or may be disposed in the engine room 23. The controller 8 may be a single device, or may be divided into a plurality of devices. For example, the controller 8 is a computer including a CPU and memories such as a ROM and RAM. The CPU executes a program stored in the ROM.

The controller 8 is electrically connected to thermometers 9 provided for the respective tanks 3. It should be noted that the illustration of their connection lines is omitted for the sake of simplifying the drawings. In the present embodiment, each of the thermometers 9 measures the temperature of the surface of the thermal insulation layer 32 (to be exact, the outer surface of the outer shell 33) of a corresponding one of the tanks 3. Alternatively, each thermometer 9 may measure the temperature of the inside of the thermal insulation layer 32 of the corresponding tank 3 (e.g., the temperature of the inner surface of the outer shell 33 or the temperature of the unshown vacuum thermal insulator).

Desirably, each thermometer 9 is provided on a straight line that extends through the lowest point on the outer shell 33 in the axial direction of the tank 3. In the present embodiment, each thermometer 9 is positioned at the lowest point of the outer shell 33 and at the center of the tank 3 in the axial direction thereof.

When the temperature measured by either of the thermometers 9 has become lower than a setting value Ts1, the controller 8 controls the seawater supplying equipment 7, such that a seawater layer is formed on the bottom of the corresponding holding space 5.

The setting value Ts1 is a temperature below which it is assumed that the performance of the thermal insulation layer 32 has deteriorated. For example, the setting value Ts1 is set within a range from -70°C to -50°C. Alternatively, since the strength of the material of which the hull 2 is made decreases under a temperature condition of -10°C or lower, the setting value Ts1 can be set to -10°C or lower.

When the temperature of the surface of the thermal insulation layer 32 of the tank 3, the temperature being measured by the thermometer 9, has become lower than the setting value Ts1, the controller 8 opens the open/close valve 74 to form a seawater layer on the bottom surface 21a of the cargo hold 21. It should be noted that the depth of the seawater layer is within a range from about several tens of millimeters to about several hundreds of millimeters.

In the illustrated example, in the ship length direction, each branch pipe 73 is positioned forward of the front saddle 25. However, the position of each branch pipe 73 is not particularly limited. Although not illustrated, a plurality of openings for allowing the seawater to pass therethrough in the ship length direction are formed in the saddles 25.

As described above, in the liquefied hydrogen carrier 1A of the present embodiment, when the performance of the thermal insulation layer 32 of the tank 3 has deteriorated and liquefied nitrogen is generated on the surface of the thermal insulation layer 32, the seawater layer is already formed on the bottom of the holding space 5. Therefore, even if the liquefied nitrogen falls off, it will not come into direct contact with the hull 2 (the bottom surface 21a of the cargo hold 21). Specifically, the liquefied nitrogen that has fallen off comes into contact with the seawater layer, and as a result, the temperature of the liquefied nitrogen increases. This makes it possible to prevent the liquefied nitrogen from causing a defect of the hull 2.

### (Embodiment 2)

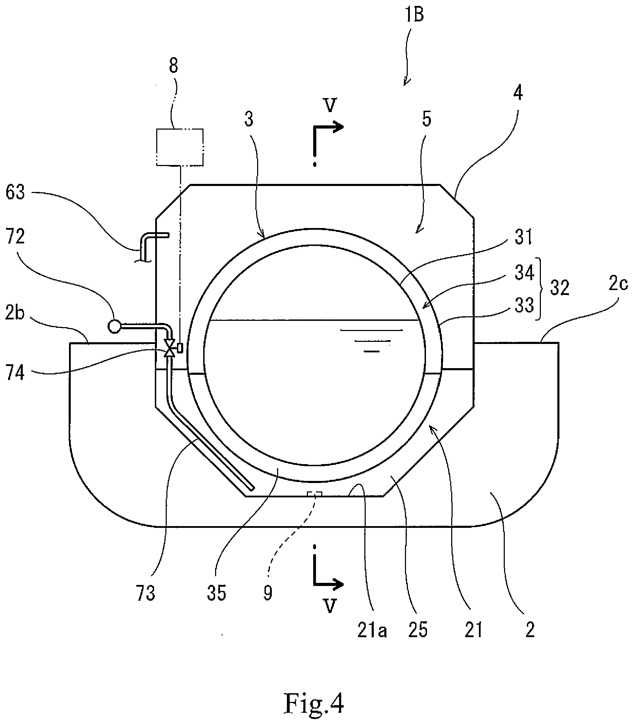

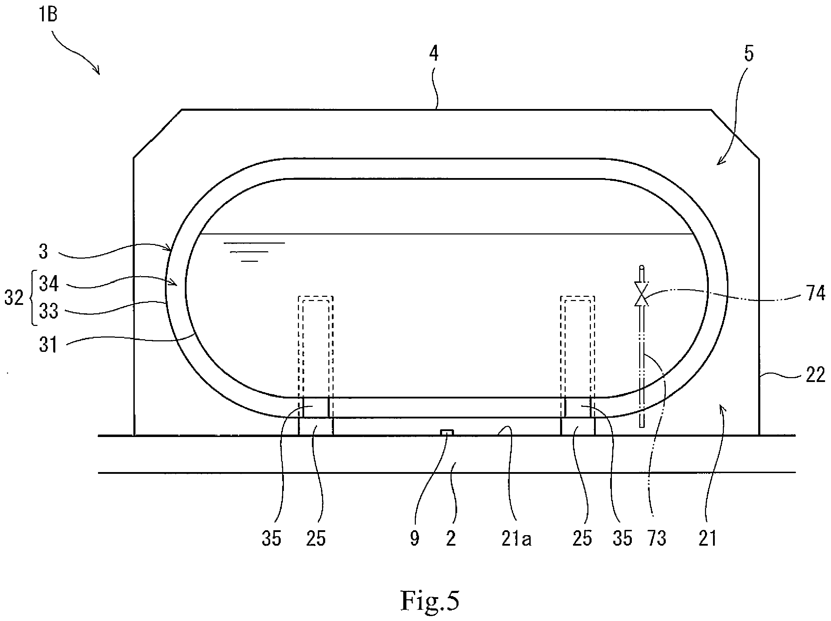

FIG. 4 and FIG. 5 show a liquefied hydrogen carrier 1B according to Embodiment 2 of the present invention. It should be noted that, in the present embodiment, the same components as those described in Embodiment 1 are denoted by the same reference signs as those used in Embodiment 1, and repeating the same descriptions is avoided.

In the present embodiment, each thermometer 9, which is provided for the corresponding tank 3, is provided on the bottom surface 21a of the corresponding cargo hold 21 (i.e., provided on a part of the hull 2, the part being positioned below the corresponding tank 3). Each thermometer 9 measures the temperature of the bottom surface 21a. Then, similar to Embodiment 1, when the temperature measured by either of the thermometers 9 has become lower than a setting value Ts2, the controller 8 controls the seawater supplying equipment 7, such that a seawater layer is formed on the bottom of the corresponding holding space 5.

The setting value Ts2 is a temperature below which it is assumed that the liquefied nitrogen has fallen off. For example, the setting value Ts2 is set within a range from -10°C to 0°C. Alternatively, since the strength of the material of which the hull 2 is made decreases under a temperature condition of -10°C or lower, the setting value Ts2 can be set to -10°C or lower.

In the liquefied hydrogen carrier 1B thus configured, immediately after the liquefied nitrogen starts falling off, the seawater layer is formed on the bottom of the holding space 5. Therefore, the liquefied nitrogen that falls off after the seawater layer is formed will not come into direct contact with the hull 2 (the bottom surface 21a of the cargo hold 21). This makes it possible to prevent the liquefied nitrogen from causing a defect of the hull 2.

### (Other Embodiments)

The present invention is not limited to the above-described embodiments. Various modifications can be made without departing from the scope of the present invention.

For example, the open/close valve 74 need not be controlled by the controller 8, but may be operated manually. For example, a ship crew may be notified, by an alarm or the like, that the temperature measured by the thermometer 9 has become lower than the setting value Ts, and at the time, the ship crew may open the open/close valve 74.

The seawater supplying equipment 7 need not double as fire extinguishing equipment, but may be provided separately from fire extinguishing equipment. However, by adopting the configurations as described above in the embodiments, the seawater supplying equipment 7, which supplies seawater into the holding spaces 5, can be configured by utilizing fire extinguishing equipment, which is essential equipment for the ship.

### Reference Signs List

- 1A, 1B: liquefied hydrogen carrier
- 2: hull
- 2a to 2d: deck
- 3: tank
- 31: tank body
- 32: thermal insulation layer
- 33: outer shell
- 34: vacuum space
- 4: tank cover
- 5: holding space
- 6: nitrogen supplying equipment
- 7: seawater supplying equipment
- 72: fire extinguishing pipe
- 73: branch pipe
- 8: controller
- 9: thermometer

## Claims

1. A liquefied hydrogen carrier (1A, 1B) comprising:
a hull (2);
a tank (3) installed in the hull (2), the tank (3) including a tank body (31) and a thermal insulation layer (32), the tank body (31) storing liquefied hydrogen, the thermal insulation layer (32) encompassing the tank body (31);
a tank cover (4) forming a holding space (5) together with the hull (2), the holding space (5) accommodating the tank (3);
nitrogen supplying equipment (6) that supplies nitrogen into the holding space (5);
seawater supplying equipment (7) that supplies seawater into the holding space (5);
a thermometer (9) that measures a temperature of a surface of the thermal insulation layer (32) or a temperature inside the thermal insulation layer (32), or a temperature of a part of the hull (2), the part of the hull being positioned below the tank (3); and
a controller (8) that controls the seawater supplying equipment (7) such that a seawater layer is formed on a bottom of the holding space (5) when the temperature measured by the thermometer (9) has become lower than a setting value.

2. The liquefied hydrogen carrier (1A, 1B) according to claim 1, wherein
the thermal insulation layer (32) includes:
an outer shell (33) that surrounds the tank body (31) while being spaced apart from the tank body (31); and
a vacuum space (34) formed between the outer shell (33) and the tank body (31).

3. The liquefied hydrogen carrier (1A, 1B) according to claim 1 or 2, wherein
the seawater supplying equipment (7) includes:
a fire extinguishing pipe (72) routed on a deck (2a, 2b, 2c, 2d) of the hull (2); and
a branch pipe (73) branched off from the fire extinguishing pipe (72).

4. A hull protection method of protecting a hull (2) in which a tank (3) is installed, the tank (3) including a tank body (31) and a thermal insulation layer (32), the tank body (31) storing liquefied hydrogen, the thermal insulation layer (32) encompassing the tank body (31), the hull (2) forming, together with a tank cover (4), a holding space (5) between the tank cover (4) and the hull (2), the holding space (5) accommodating the tank (3) and being filled with nitrogen,
the method comprising forming a seawater layer on a bottom of the holding space (5) by supplying seawater into the holding space (5) when a temperature of a surface of the thermal insulation layer (32) of the tank (3), a temperature inside the thermal insulation layer (32), or a temperature of a part of the hull (2), the part being positioned below the tank (3), has become lower than a setting value.

## Patentansprüche

1. Verflüssigter Wasserstoffträger (1A, 1B), umfassend:
einen Rumpf (2);
einen in den Rumpf (2) eingebauten Tank (3), wobei der Tank (3) einen Tankkörper (31) und eine Wärmedämmschicht (32) einschließt, wobei der Tankkörper (31) verflüssigten Wasserstoff speichert, wobei die Wärmedämmschicht (32) den Tankkörper (31) umhüllt;
eine Tankabdeckung (4), die zusammen mit dem Rumpf (2) einen Aufnahmeraum (5) bildet, wobei der Aufnahmeraum (5) den Tank (3) unterbringt;
Stickstoffzuführungsausrüstung (6), die Stickstoff in den Aufnahmeraum (5) zuführt;
Meerwasserzuführungsausrüstung (7), die Meerwasser in den Aufnahmeraum (5) zuführt;
ein Thermometer (9), das eine Temperatur einer Oberfläche der Wärmedämmschicht (32) oder eine Temperatur im Inneren der Wärmedämmschicht (32) oder eine Temperatur eines Teils des Rumpfes (2) misst, wobei der Teil des Rumpfes unterhalb des Tanks (3) angeordnet ist; und
eine Steuereinheit (8), die die Meerwasserzuführungsausrüstung (7) so steuert, dass eine Meerwasserschicht auf einem Boden des Aufnahmeraums (5) gebildet wird, wenn die von dem Thermometer (9) gemessene Temperatur niedriger als ein Einstellwert geworden ist.

2. Verflüssigter Wasserstoffträger (1A, 1B) nach Anspruch 1, wobei
die Wärmedämmschicht (32) Folgendes einschließt:
eine äußere Schale (33), die den Tankkörper (31) umgibt, während sie von dem Tankkörper (31) beabstandet ist; und
einen Vakuumraum (34), der zwischen der äußeren Schale (33) und dem Tankkörper (31) ausgebildet ist.

3. Verflüssigter Wasserstoffträger (1A, 1B) nach Anspruch 1 oder 2, wobei
die Meerwasserzuführungsausrüstung (7) Folgendes einschließt:
eine Feuerlöschleitung (72), die auf einem Deck (2a, 2b, 2c, 2d) des Rumpfes (2) verlegt ist; und
eine Abzweigleitung (73), die von der Feuerlöschleitung (72) abzweigt.

4. Rumpfschutzverfahren zum Schutz eines Rumpfes (2), in dem ein Tank (3) eingebaut ist, wobei der Tank (3) einen Tankkörper (31) und eine Wärmedämmschicht (32) einschließt, wobei der Tankkörper (31) verflüssigten Wasserstoff speichert, wobei die Wärmedämmschicht (32) den Tankkörper (31) umgibt, wobei der Rumpf (2) zusammen mit einer Tankabdeckung (4) einen Aufnahmeraum (5) zwischen derTankabdeckung (4) und dem Rumpf (2) bildet, wobei der Aufnahmeraum (5) den Tank (3) unterbringt und mit Stickstoff gefüllt ist,
wobei das Verfahren das Bilden einer Meerwasserschicht auf einem Boden des Aufnahmeraums (5) durch Zuführen von Meerwasser in den Aufnahmeraum (5) umfasst, wenn eine Temperatur einer Oberfläche der Wärmedämmschicht (32) des Tanks (3), eine Temperatur im Inneren der Wärmedämmschicht (32) oder eine Temperatur eines Teils des Rumpfes (2), wobei der Teil unterhalb des Tanks (3) angeordnet ist, niedriger als ein Einstellwert geworden ist.

## Revendications

1. Navire de transport d'hydrogène liquéfié (1A, 1B) comprenant :
une coque (2) ;
une citerne (3) installée dans la coque (2), la citerne (3) incluant un corps de citerne (31) et une couche d'isolation thermique (32), le corps de citerne (31) stockant de l'hydrogène liquéfié, la couche d'isolation thermique (32) enveloppant le corps de citerne (31) ;
un couvercle de citerne (4) formant un espace de contenance (5) avec la coque (2), l'espace de contenance (5) logeant la citerne (3) ;
un équipement de distribution d'azote (6) qui distribue de l'azote dans l'espace de contenance (5) ;
un équipement de distribution d'eau de mer (7) qui distribue de l'eau de mer dans l'espace de contenance (5) ;
un thermomètre (9) qui mesure une température d'une surface de la couche d'isolation thermique (32) ou une température à l'intérieur de la couche d'isolation thermique (32), ou une température d'une partie de la coque (2), la partie de la coque étant positionnée au-dessous de la citerne (3) ; et
un dispositif de commande (8) qui commande l'équipement de distribution d'eau de mer (7) de sorte qu'une couche d'eau de mer soit formée sur un fond de l'espace de contenance (5) lorsque la température mesurée par le thermomètre (9) est devenue inférieure à une valeur de consigne.

2. Navire de transport d'hydrogène liquéfié (1A, 1B) selon la revendication 1, dans lequel
la couche d'isolation thermique (32) inclut :
une coque extérieure (33) qui entoure le corps de citerne (31) tout en étant espacée du corps de citerne (31) ; et
un espace de vide (34) formé entre la coque extérieure (33) et le corps de citerne (31).

3. Navire de transport d'hydrogène liquéfié (1A, 1B) selon la revendication 1 ou 2, dans lequel
l'équipement de distribution d'eau de mer (7) inclut :
une canalisation d'extinction d'incendie (72) acheminée sur un pont (2a, 2b, 2c, 2d) de la coque (2) ; et
une canalisation de ramification (73) ramifiée depuis la canalisation d'extension d'incendie (72).

4. Procédé de protection de coque pour protéger une coque (2) dans laquelle une citerne (3) est installée, la citerne (3) incluant un corps de citerne (31) et une couche d'isolation thermique (32), le corps de citerne (31) stockant de l'hydrogène liquéfié, la couche d'isolation thermique (32) enveloppant le corps de citerne (31), la coque (2) formant, avec un couvercle de citerne (4), un espace de contenance (5) entre le couvercle de citerne (4) et la coque (2), l'espace de contenance (5) logeant la citerne (3) et étant rempli d'hydrogène,
le procédé comprenant la formation d'une couche d'eau de mer sur un fond de l'espace de contenance (5) par la distribution d'eau de mer dans l'espace de contenance (5) lorsqu'une température d'une surface de la couche d'isolation thermique (32) de la citerne (3), une température à l'intérieur de la couche d'isolation thermique (32), ou une température d'une partie de la coque (2), la partie étant positionnée au-dessous de la citerne (3) est devenue inférieure à une valeur de consigne.
